# EUROPÄISCHE PATENTSCHRIFT

(11) **EP 3 228 974 B1**
(45) Veröffentlichungstag und Bekanntmachung des Hinweises auf die Patenterteilung: **01.06.2022**
(21) Anmeldenummer: 16163956.2
(22) Anmeldetag: 06.04.2016
(51) Int. Cl.: G01B 5/20, G01B 5/28

(54) **RAUHEITSMESSTASTER, VORRICHTUNG MIT RAUHEITSMESSTASTER UND ENTSPRECHENDE VERWENDUNG**
ROUGHNESS MEASURING PROBE, DEVICE WITH ROUGHNESS MEASURING PROBE AND CORRESPONDING USE
CAPTEUR DE RUGOSITE , DISPOSITIF DOTE D'UN CAPTEUR DE RUGOSITE ET PROCEDE CORRESPONDANT

(43) Veröffentlichungstag der Anmeldung: 11.10.2017
(73) Patentinhaber: Klingelnberg AG, 8050 Zürich (CH)
(72) Erfinder: MIES, Georg, 51688 Wipperführt (DE)
(74) Vertreter: Janke Scholl Patentanwälte PartG mbB

(56) Entgegenhaltungen:
- WO-A2-2010/079019
- DE-A1- 2 535 912
- DE-A1- 3 937 207
- DE-A1-102005 007 002

## Beschreibung

Die Erfindung betrifft einen Rauheitsmesstaster, eine Vorrichtung mit einem solchen Rauheitsmesstaster und eine entsprechende Verwendung.

### HINTERGRUND DER ERFINDUNG

In vielen technischen Bereichen ist die Oberflächenstruktur eines Bauteils oder Materials ein wichtiges Qualitätsmerkmal.

Es gibt daher verschiedene Rauheitsmessvorrichtungen zum Erfassen der Rauheit bzw. Rauhtiefen von Oberflächen. Typischerweise wird bei der mechanischen Abtastung eine Tastspitze über die Oberfläche geführt. Das Ergebnis ist ein über den Tastweg aufgezeichnetes Höhensignal, das auch als Oberflächenprofil bezeichnet wird. Rauheitsmessvorrichtungen sind aus DE 10 2005 007 002 A1, DE 25 35 912 A und DE 39 37 207 A1 bekannt.

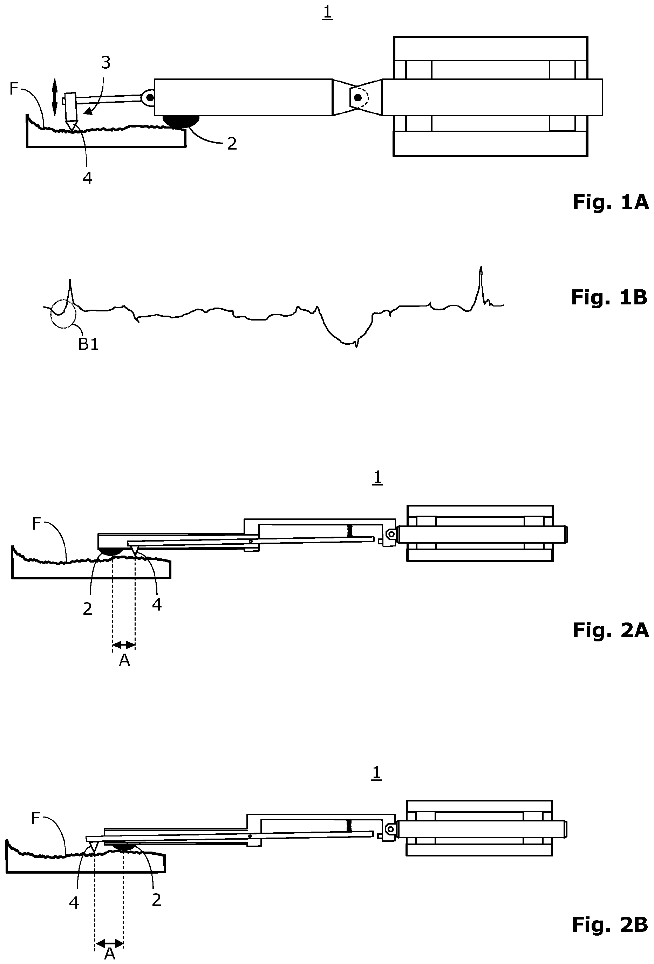

Es sind Gleitkufentaster 1 bekannt, wie in Fig. 1A in schematisierter Form gezeigt. Ein Gleitkufentaster 1 hat eine Gleitkufe 2, die je nach Anwendungsgebiet einen grossen oder kleinen Radius hat und die als Gleitelement dient. Die Tastspitze 4 eines Tasters 3 liegt mit der Gleitkufe 2 auf einer zu messenden Oberfläche F auf und erfasst mit der Tastspitze 4 das Oberflächenprofil relativ zur Bahn der Gleitkufe 2. Die Gleitkufe 2 folgt während der Messung den makroskopischen Unebenheiten der Oberfläche F, also der Welligkeit und makroskopischen Form. Die Tastspitze 4 hingegen erfasst mit ihrem kleinen Spitzenradius die Oberflächenrauheit und ertastet z.B. Riefen, die von der Gleitkufe 2 überbrückt wurden, da diese einen weit grösseren wirksamen Radius aufweist. Die Gleitkufe 2 wirkt somit als eine Art mechanischer Hochpassfilter.

In Fig. 1B ist das Abtastergebnis eines Gleitkufentasters 1 der Fig. 1A in schematischer Form gezeigt. Charakteristisch für einen Gleitkufentaster 1 ist zum Beispiel das Verhalten vor einer Erhebung auf der Oberfläche F. Der Gleitkufentaster 1 wird über die Oberfläche F gezogen, daher erreicht die Gleitkufe 2 diese Erhebung vor der Tastspitze 4. Dadurch wird der gesamte Taster 3 angehoben und die Tastspitze 4 ragt dann weiter nach unten aus dem umgebenden Tastergehäuse heraus. Dies wird so aufgezeichnet (siehe Bereich B1 in Fig. 1B), als ob die Tastspitze 4 vor dem Erreichen der Erhebung scheinbar in eine Senke der Oberfläche F laufen würde.

Aus der publizierten Patentanmeldung WO2010079019A2 ist ein verbesserter Gleitkufentaster bekannt. Dieser Gleitkufentaster ist in Fig. 2A in einer entsprechenden Funktions-Ansicht gezeigt. Um den verbesserten Gleitkufentaster der Fig. 2A mit der Lösung der Fig. 1A vergleichen zu können, wurden hier dieselben Bezugszeichen verwendet. Das Gleitelement 2 ist am extremalen Ende eines Taststifts angeordnet. Die Tastspitze 4 ist in den Taststift integriert, wobei der Abstand A zwischen dem Gleitelement 2 und der Tastspitze 4 fest vorgegeben ist.

Ein weiterer beispielhafter Gleitkufentaster 1 ist in Fig. 2B gezeigt. Der Gleitkufentaster 1 der Fig. 2B basiert auf dem Grundprinzip der Fig. 2A. Anders als in Fig. 2A ist hier jedoch die Reihenfolge von Tastspitze 4 und Gleitelement 2 umgekehrt. Bei dem in Fig. 2B gezeigten Beispiel liegt die Tastspitze 4 vor Gleitelement 2. Auch hier ist der Abstand A zwischen dem Gleitelement 2 und der Tastspitze 4 fest vorgegeben.

Gleitkufentaster können teilweise verfälschte Ergebnisse liefern. Dies ist zum Beispiel dann der Fall, wenn sich die Bewegung der Gleitkufe 2 mit der Bewegung der Tastspitze 4 konstruktiv überlagert und damit ein zu grosses Ausgangssignal geliefert wird, oder wenn sich die Bewegungen ganz oder teilweise auslöschen und dadurch ein zu kleines Signal geliefert wird.

Andere Probleme treten zum Beispiel beim Messen der Oberflächeneigenschaften von Zahnflanken auf. Einerseits sind die bisherigen Gleitkufentaster nicht dazu geeignet, weit in die Zahnlücken von kleinmoduligen Zahnrädern einzutauchen. Andererseits läuft das Gleitelement 2 ins Leere, wenn der Zahnkopf einer Zahnflanke erreicht wird. Daher kann man die Topografie von Zahnflanken nicht bis nahe an den Zahnkopf heran messen. Eine Lösung gemäß Fig. 2A ist nicht geeignet, da die Tastspitze 4 beim Erreichen des Zahnkopfes in Leere läuft. Bei einer Lösung nach Fig. 2B hingegen würde die Gleitkufe 2 beim Erreichen des Zahnkopfes ins Leere laufen.

Es ist eine Aufgabe der Erfindung einen Rauheitsmesstaster bereit zu stellen, der es ermöglicht Rauheitsmessungen auch an kleinmoduligen Zahnrädern und an anderen 3-dimensionalen Strukturen durchzuführen, wobei möglichst ein grosser Flächenanteil einer zu messenden Oberfläche mit hoher Genauigkeit gemessen werden soll.

Ausserdem geht es darum eine (Mess-)Vorrichtung mit einem geeigneten Rauheitsmesstaster bereit zu stellen, die es ermöglicht verbesserte Rauheitsmessungen z.B. an Zahnradflanken durchzuführen. Weiterhin geht es um die Verwendung eines solchen Rauheitsmesstasters.

Eine weitere Aufgabe der Erfindung ist es an genau vorgegebenen Positionen identischer Bauteile Rauheitsmessungen durch führen zu können.

Die Aufgabe wird durch einen Rauheitsmesstaster gemäß Anspruch 1, eine Vorrichtung gemäß Anspruch 9 und durch eine Verwendung eines Rauheitsmesstasters gemäß Anspruch 11 gelöst.

Ein erfindungsgemäßer Rauheitsmesstaster umfasst ein Gleitelement und eine Tastspitze, wobei die Tastspitze am extremalen Ende eines Tastarms angeordnet ist, der eine Längsausdehung parallel zu einer Längsachse aufweist und der hebelartig gelagert ist, wobei das Gleitelement in Form einer Gleitkufe ausgelegt ist. der erfindungsgemäße Rauheitsmesstaster zeichnet sich durch die Merkmale des kennzeichnenden Teils des Anspruchs 1 aus.

Vorzugsweise zeichnen sich alle Ausführungsformen dadurch aus, dass einerseits die Gleitkufe einen grossen Radius aufweist, um so eine effektive Integrationswirkung beim Abtasten von Oberflächen zu zeigen, und dass andererseits der Abstand zwischen einem untersten Berührungspunkt der Tastspitze und einem untersten Gleitpunkt der Gleitkufe möglichst gering ist.

Der Rauheitsmesstaster der Erfindung kann in Bereich des extremalen Endes des Tastarms einen asymmetrischen Aufbau haben, bei dem die Gleitkufe nur rechts oder nur links seitlich neben der Tastspitze sitzt.

Der Rauheitsmesstaster der Erfindung kann in Bereich des extremalen Endes des Tastarms jedoch auch einen symmetrischen Aufbau haben, bei dem eine Gleitkufe rechts und eine Gleitkufe links seitlich neben der Tastspitze sitzt. Ein solcher Rauheitsmesstaster wird vorzugsweise in einer leichten Schrägstellung verwendet, damit jeweils entweder nur die linke oder nur die rechte Gleitkufe zusammen mit der Tastspitze zum Einsatz kommt.

Vorzugsweise hat die Gleitkufe bei allen Ausführungsformen eine konvexe Oberfläche mit einem untersten Gleitpunkt, der sich gegenüber einer Endfläche/Stirnfläche der Gleitkufe ein Stück weiter hinten in Richtung Messmaschine an der Gleitkufe befindet.

Vorzugsweise hat die Gleitkufe bei allen Ausführungsformen einen gekrümmten Querverlauf in einer Querschnittebene betrachtet, wobei der unterste Gleitpunkt einen Nulldurchgang des gekrümmten Querverlaufs definiert. D.h. der gekrümmte Querverlauf steigt rechts und links, ausgehend von dem Nulldurchgang an. Eine solche Lösung zeigt eine effektive Integrationswirkung und ein gutes Gleitverhalten.

Vorzugsweise hat die Gleitkufe bei allen Ausführungsformen einen gekrümmten Längsverlauf in einer Längsschnittebene betrachtet, wobei der unterste Gleitpunkt nicht an der Endfläche/Stirnfläche der Gleitkufe liegt. Eine solche Lösung zeigt eine effektive Integrationswirkung und ein gutes Gleitverhalten.

Vorzugsweise hat die Gleitkufe bei allen Ausführungsformen einen gekrümmten Längsverlauf, der in einer Längsschnittebene betrachtet einen ersten Startpunkt an der Endfläche/Stirnfläche der Gleitkufe hat. Von dort erstreckt sich der Längsverlauf abwärts, wenn man rückwärts parallel der Richtung der Längsachse in Richtung Messmaschine folgt. In der Schnittebene hat der Längsverlauf seinen untersten Punkt in der Längsschnittebene. Nach dem untersten Punkt zeigt der Längsverlauf, wenn man weiter rückwärts parallel der Richtung der Längsachse folgt, einen Anstieg, wobei der Längsverlauf vorzugsweise bei allen Ausführungsformen in einer rückwärtigen Endfläche/Stirnfläche der Gleitkufe mündet.

Eine erfindungsgemäße Vorrichtung umfasst ein Rauheitstastsystem mit einem Rauheitsmesstaster der Erfindung, wobei das Rauheitstastsystem speziell zum Messen der Oberflächenrauheit der Zahnflanken von Zahnrädern ausgelegt ist.

Ein erfindungsgemäße Verwendung eines Rauheitsmesstasters dient speziell dem Messen der Oberflächenrauheit der Zahnflanken von Zahnrädern, wobei die Längsachse des Rauheitsmesstasters so geführt wird, dass diese flach über die Zahnflanke parallel oder schräg zur Profilrichtung geführt wird.

Vorteilhafte Ausgestaltungen des erfindungsgemäßen Rauheitsmesstasters, der Vorrichtung und der Verwendung sind den abhängigen Ansprüchen zu entnehmen.

Die Erfindung lässt sich im Zusammenhang mit 1D-, 2D- und 3D-Messvorrichtungen verwenden.

### ZEICHNUNGEN

Ausführungsbeispiele der Erfindung werden im Folgenden unter Bezugnahme auf die Zeichnungen näher beschrieben.
- **FIG. 1A**: zeigt eine schematische Ansicht eines vorbekannten Gleitkufenmessgeräts;
- **FIG. 1B**: zeigt eine schematische Kurve, die von einem Gleitkufenmessgerät nach Fig. 1A aufgenommen wurde;
- **FIG. 2A**: zeigt eine schematische Ansicht eines vorbekannten verbesserten Gleitkufenmessgeräts;
- **FIG. 2B**: zeigt eine schematische Ansicht eines weiteren Gleitkufenmessgeräts, das auf dem Ansatz der Fig. 2A basiert;
- **FIG. 3A**: zeigt eine schematische Ansicht eines Rauheitsmesstasters der Erfindung von unten;
- **FIG. 3B**: zeigt eine schematische Perspektivansicht des Rauheitsmesstasters der Fig. 3A von schräg unten;
- **FIG. 3C**: zeigt eine schematische, vergrößerte Ansicht der Fig. 3B;
- **FIG. 3D**: zeigt eine schematische vergrößerte Ansicht des Rauheitsmesstasters der Fig. 3A von vorne;
- **FIG. 3E**: zeigt eine schematische vergrößerte Ansicht eines weiteren Rauheitsmesstasters von vorne, wobei hier nur die Gleitkufe und der Tastarm mit Tastspitze gezeigt sind;
- **FIG.** 4: zeigt den schematischen Aufbau eines Ein-Koordinaten-Tastkopfes mit dem Rauheitsmesstaster der Fig. 3A;
- **FIG.** 5: zeigt eine perspektivische Ansicht einer Vorrichtung (hier in Form eines CNC-Messgeräts), die mit einem Rauheitsmesstaster der Erfindung ausgestattet ist.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Der Begriff Rauheit wird hier verwendet, um die Oberflächenqualität einer Oberfläche F zu bezeichnen. Die Rauheit beschränkt sich eher auf mikroskopische, im Sinne von punktuellen oder lokalen Aussagen. Typischerweise geht es im Zusammenhang mit der Rauheit hier um Strukturen, Elemente und Merkmale einer Oberfläche F, die eine Grösse im Bereich von nm bis ca. 500 µm haben. Insbesondere geht es hier um das Messen der Oberfläche der Zahnflanken von Zahnrädern 11 und von ähnlichen Produkten.

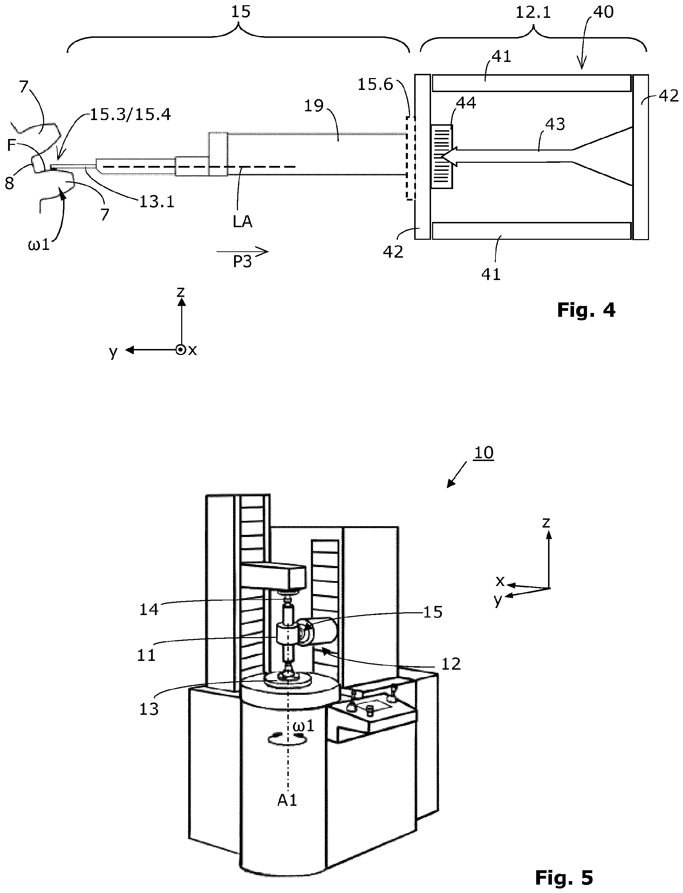

Um die Oberfläche F, z.B. der Zahnflanke eines Zahnes 7, auswerten oder abtasten zu können (siehe auch Fig. 4), müssen typischerweise mehrere Messpunkte entlang einer Line, Kurve oder Fläche F abgetastet werden.

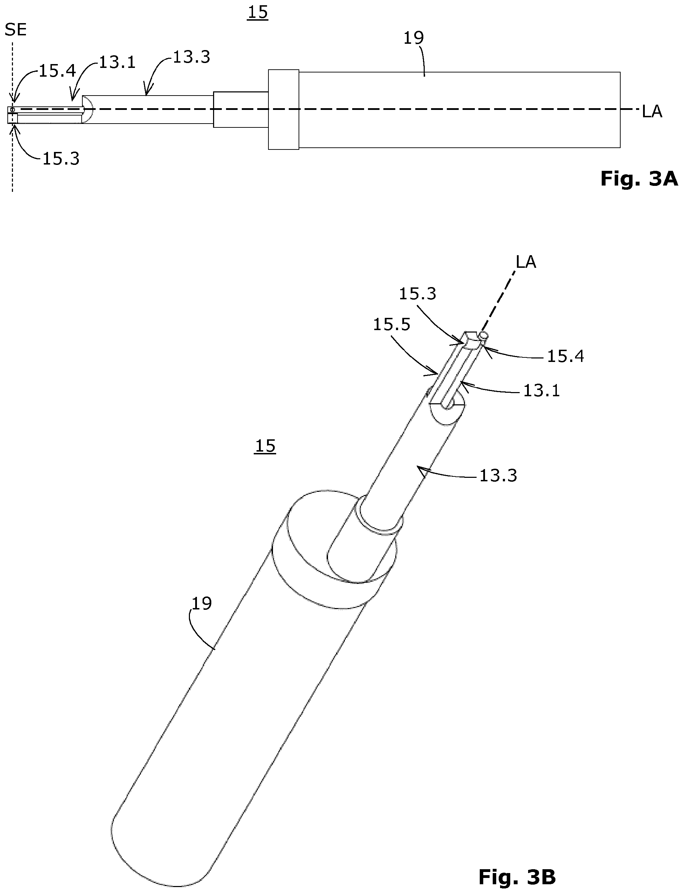

In den Figuren 3A - 3D sind Details einer bevorzugten Ausführungsform eines Rauheitsmesstasters 15 der Erfindung gezeigt. Der Rauheitsmesstaster 15 umfasst ein Gleitelement 15.3, auf das noch eingegangen wird, und eine Tastspitze 15.4. Die Tastspitze 15.4 sitzt im Bereich des extremalen Endes eines Tastarms 13.1. Das Gleitelement 15.3 sitzt seitlich möglichst nah neben der Tastspitze 15.4.

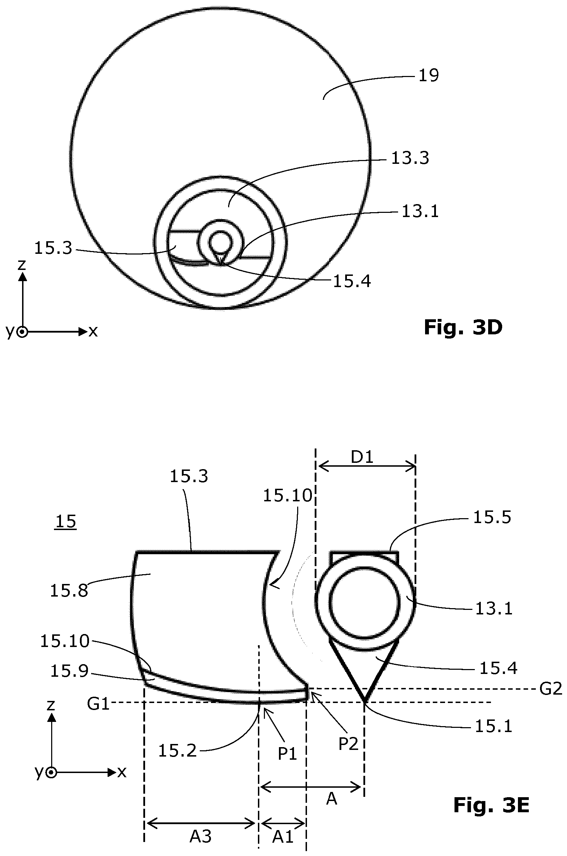

Der Tastarm 13.1 zeichnet sich bei allen Ausführungsformen dadurch aus, dass er eine Längsausdehung parallel zu einer Längsachse LA aufweist. Vorzugsweise ist der Tastarm 13.1 bei allen Ausführungsformen lang und schmal (z.B. indem er einen geringen Durchmesser D1 hat, wie in Fig. 3E eingezeichnet), damit der Rauheitsmesstaster 15 möglichst bis zum Zahnfuß 8 (siehe Fig. 4) in eine enge Zahnlücke zwischen benachbarten Zähnen 7 eindringen kann.

Weiterhin umfasst der Rauheitsmesstaster 15 bei allen Ausführungsformen eine hebelartige Lagerung, die dazu ausgelegt ist kleine Auslenkungen der Tastspitze 15.4 in z-Richtung in entsprechende Auslenkungen an einem gegenüberliegenden Ende eines Hebelarms zu übersetzen. Es kann hier bei allen Ausführungsformen eine hebelartige Lagerung des Tastarms 13.1 vorgesehen sein, die eine mechanische 1:1 Umsetzung der Auslenkungen der Tastspitze 15.4 in z-Richtung vornimmt. Es kann hier bei allen Ausführungsformen aber auch eine hebelartige Lagerung des Tastarms 13.1 vorgesehen sein, die eine vergrössernde Übersetzung der Auslenkungen der Tastspitze 15.4 in z-Richtung vornimmt. In diesem Fall wird eine kleine Auslenkung der Tastspitze 15.4 in z-Richtung übersetzt in eine grössere Auslenkung des gegenüberliegenden Endes des Tastarms 13.1 in z-Richtung. Es kann bei allen Ausführungsformen aber auch eine Untersetzung der hebelartigen Lagerung vorgesehen sein.

Ja nach Ausführungsform kann der Tastarm 13.1 hebelartig (zum Beispiel im Inneren einer Gehäuses 19) gelagert sein oder es kann ein anderer Abschnitt des Rauheitsmesstasters 15 (z.B. ein Hohlzylinder 13.3) zur Aufnahme der hebelartigen Lagerung des Tastarms 13.1 dienen.

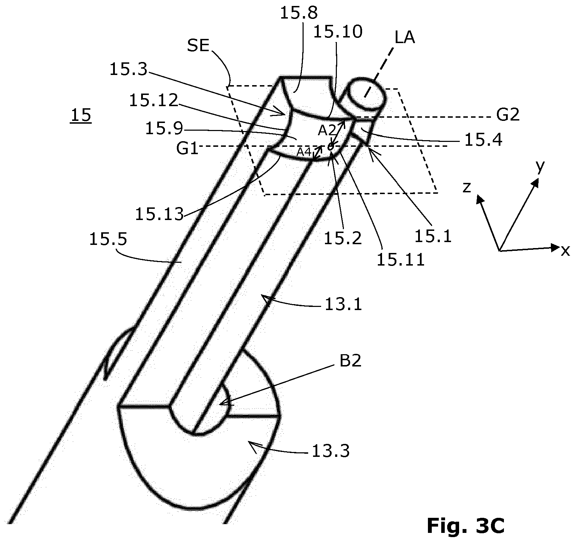

Gemäss Erfindung ist das Gleitelement in Form einer Gleitkufe 15.3 ausgelegt, wie in den Figuren 3A - 3D anhand eines ersten Beispiels gezeigt. Diese Gleitkufe 15.3 ist bei allen Ausführungsformen seitlich neben der Tastspitze 15.4 angeordnet. Der Begriff "seitlich neben" bezieht sich hier auf eine Schnittebene SE, die senkrecht zu der Längsachse LA steht. In Fig. 3C ist diese Schnittebene SE schematisch angedeutet. Noch besser erkennt man die seitliche Anordnung der Gleitkufe 15.3 neben der Tastspitze 15.4 einer ersten Ausführungsform in Fig. 3D und die seitliche Anordnung der Gleitkufe 15.3 neben der Tastspitze 15.4 einer zweiten Ausführungsform in Fig. 3E.

Der Tastarm 13.1 kann bei allen Ausführungsformen mindestens im Bereich seines extremalen Endes die Form eines Hohlzylinders (siehe Fig. 3E) oder eines Vollzylinders (siehe Fig. 3D) haben. Der Tastarm 13.1 kann bei allen Ausführungsformen aber auch eine andere geeignete Stabform haben. Daher ist hier auch von einem stabförmigen, länglichen Tastarm 13.1 die Rede.

Der Tastarm 13.1 kann sich bei allen Ausführungsformen in das Innere z.B. eines Hohlzylinders 13.3 erstrecken, der mindestens teilweise hohl oder offen ausgeführt sein kann, um in seinem Inneren eine Hebelarm-Lagerung zu realisieren, mittels welcher der Tastarm 13.1 hebelartig gelagert ist.

Der Tastarm 13.1 kann sich bei allen Ausführungsformen komplett durch das Innere z.B. eines Hohlzylinders 13.3 erstrecken, der vollständig hohl ausgeführt ist. In diesem Fall erstreckt sich der Tastarm 13.1 vorzugsweise komplett durch den Hohlzylinder 13.3 hindurch, um dann z.B. im Inneren eines Gehäuses 19 hebelartig gelagert zu sein.

Die Tastspitze 15.4 kann bei allen Ausführungsformen am Aussenumfang dieses stabförmigen, länglichen Tastarms 13.1 sitzen, wie in den Figuren 3A bis 3D gezeigt.

Besonders bevorzugt sind Ausführungsformen, bei denen sich die Tastspitze 15.4 in eine radiale Richtung, bezogen auf die Längsachse LA, erstreckt.

Die Tastspitze 15.4 kann bei allen Ausführungsformen den Tastarm 13.1 teilweise oder ganz durchdringen. In Fig. 3E ist eine Ausführungsform gezeigt, bei welcher der Tastarm 13.1 mindestens im Bereich der vorderen extremalen Endes als Hohlzylinder ausgeführt ist und bei welcher die Tastspitze 15.4 den Tastarm 13.1 komplett durchdringt. In Fig. 3E ist eine Ausführungsform gezeigt, bei welcher die Tastspitze 15.4 den Tastarm 13.1 ganz durchdringt, wie daran zu erkennen ist, dass das rückwärtige Ende 15.5 der Tastspitze 15.4 oben aus dem Tastarm 13.1 heraus ragt.

Die Tastspitze 15.4 kann zum Beispiel eine Spitze aufweisen, die, wie in Fig. 3C und 3E zu erkennen ist, einen Punkt (unterster Berührungspunkt 15.1 der Tastspitze 15.4 genannt) definiert, der auf einer Geraden G1 liegt, wenn die Gleitkufe 15.3 und die Tastspitze 15.4 auf einer ideal glatten Oberfläche F aufsitzen, wie in Fig. 3E gezeigt (die Oberfläche F fällt hier mit der Geraden G1 zusammen). Ausgehend von diesem untersten Berührungspunkt 15.1 kann die Tastspitze 15.4 z.B. eine dreieckförmige oder pyramidenförmige Gestalt haben, die im Bereich des Tastarms 13.1 in eine rechteckige und quadratische Platte 15.7 übergeht, die sich wiederum bis zu dem erwähnten rückwärtigen Ende erstreckt 15.5 (siehe Fig. 3E).

Die Tastspitze 15.4 kann jedoch bei allen Ausführungsformen im untersten Bereich (nahe am untersten Berührungspunkt 15.1) eine konische (kegelförmige) Gestalt haben, die noch oben hin in einen zylindrischen Bereich übergeht.

Vorzugsweise definiert die Tastspitze 15.4 bei allen Ausführungsformen den bereits erwähnten untersten Berührpunkt 15.1 der Tastspitze 15.4 (siehe Fig. 3C oder 3E). In einer Querschnittsebene betrachtet (die bei allen Ausführungsformen mit der Schnittebene SE zusammen fallen kann), die senkrecht zu der Längsachse LA steht, weist die Gleitkufe 15.3 vorzugsweise einen kreisbogenförmigen Verlauf mit einem untersten Gleitpunkt 15.2 auf, wie in Fig. 3C durch einen kleinen Kreis auf der Geraden G1 gezeigt. Auch in Fig. 3E sind der unterste Berührpunkt 15.1 und der unterste Gleitpunkt 15.2 gut zu erkennen.

Dieser unterste Gleitpunkt 15.2 liegt bei allen Ausführungsformen zusammen mit dem untersten Berührpunkt 15.1 auf der gemeinsamen Gerade G1 (wenn die Gleitkufe 15.3 und die Tastspitze 15.4 auf einer ideal glatten Oberfläche F aufsitzen). Diese Gerade G1 liegt in einer Querschnittsebene und sie kann bei allen Ausführungsformen horizontal (d.h. parallel zur x-Achse) verlaufen, wie man in der Fig. 3E erkennen kann.

Allgemeiner ausgedrückt kann gesagt werden, dass die Gerade G1 senkrecht zu der Längsachse LA verläuft.

Vorzugsweise hat die Gleitkufe 15.3 bei allen Ausführungsformen einen konvexen Kurvenverlauf in einer Längsschnittebene betrachtet und/oder einen konvexen Kurvenverlauf in einer Querschnittebene betrachtet. Die Längsschnittebene ist eine Ebene, die sich parallel zur der Längsachse LA erstreckt. Die Querschnittebene steht senkrecht zur Längsachse LA.

Vorzugsweise hat die Gleitkufe 15.3 bei allen Ausführungsformen eine konvexe Oberfläche mit einem untersten Gleitpunkt 15.2, der gegenüber einer Endfläche/Stirnfläche 15.8 der Gleitkufe 15.3 ein Stück weiter hinten (in Richtung Messmaschine) an der Gleitkufe 15.3 befindet. Details hierzu sind z.B. der Fig. 3C zu entnehmen. In Fig. 3C ist die Lage eines vorderen Eckpunktes P2 der Endfläche/Stirnfläche 15.8 der Gleitkufe 15.3 durch eine Gerade G2 angedeutet, die sich parallel zu der Geraden G1 erstreckt. Wenn man die beiden Geraden G1 und G2 in eine gemeinsame x-y-Ebene Ebene projiziert, dann kann man erkennen, dass die Gerade G2 vor der Geraden G1 liegt.

Weitere Details sind der Fig. 3E zu entnehmen. Die Details der Ausführungsform der Fig. 3E lassen sich auch auf die Ausführungsform der Figuren 3A - 3D übertragen. Auch in Fig. 3E ist die Gerade G2 eingezeichnet. Wenn man die beiden Geraden G1 und G2 in eine gemeinsame x-z-Ebene Ebene projiziert, dann kann man erkennen, dass die Gerade G2 oberhalb der Geraden G1 liegt. D.h. der Eckpunkt P2 ist gegenüber dem untersten Gleitpunkt 15.2 und gegenüber dem unterster Berührpunkt 15.1 ein Stück zurück versetzt (d.h. nach oben hin versetzt).

Vorzugsweise hat die Gleitkufe 15.3 bei allen Ausführungsformen einen gekrümmten Querverlauf in einer Querschnittebene betrachtet, wobei der unterste Gleitpunkt 15.2 einen Nulldurchgang P1 des gekrümmten Querverlaufs definiert. Die Querschnittebene liegt quer zur Längsachse LA, d.h. die Querschnittebene liegt parallel zur x-z-Ebene. Der gekrümmte Querverlauf steigt rechts und links, ausgehend von dem Nulldurchgang P1 an, wie man in den Figuren 3D und 3E erkennen kann. Diese Ausführungsformen zeichnen sich dadurch aus, dass einerseits die Gleitkufe 15.3 im direkten Umfeld des untersten Gleitpunkts 15.2 einen möglichst grossen Radius hat (um die gewünschte Integrationswirkung zu zeigen) und dass andererseits der seitliche Abstand A zum untersten Berührpunkt 15.1 möglichst gering ist. Außerdem haben diese Ausführungsformen eine gute Gleitwirkung, da die Gleitkufe 15.3 nicht mit einer Längs- und/oder Querkante sondern mit dem direkten Umfeld des untersten Gleitpunkts 15.2 über die Oberfläche F geführt wird.

Vorzugsweise hat die Gleitkufe 15.3 bei allen Ausführungsformen einen gekrümmten Längsverlauf in einer Längsschnittebene betrachtet, die parallel zur y-z-Ebene liegt. Der unterste Gleitpunkt 15.2 liegt nicht an der Endfläche/Stirnfläche 15.8 der Gleitkufe 15.3, sondern der unterste Gleitpunkt 15.2 liegt im Bereich der gekrümmten Unterseite 15.9 der Gleitkufe 15.3. Ein Streifen der gekrümmten Unterseite 15.9 ist in Fig. 3E zu erkennen. In Fig. 3C ist die gekrümmte Unterseite 15.9 vollständig zu erkennen.

Vorzugsweise hat die Gleitkufe 15.3 bei allen Ausführungsformen einen gekrümmten Längsverlauf, der in einer Längsschnittebene betrachtet einen ersten Startpunkt an der Endfläche/Stirnfläche 15.8 der Gleitkufe 15.3 hat. Von dort erstreckt sich der Längsverlauf abwärts, wenn man rückwärts parallel der Richtung der Längsachse LA folgt. In der Schnittebene SE hat der Längsverlauf seinen untersten Punkt auf der Schnittlinie mit der Längsschnittebene. Nach dem untersten Punkt zeigt der Längsverlauf, wenn man weiter rückwärts parallel der Richtung der Längsachse LA folgt, einen Anstieg, wobei der Längsverlauf vorzugsweise bei allen Ausführungsformen in einer rückwärtigen Endfläche/Stirnfläche der Gleitkufe 15.3 mündet.

Weiterhin kann die Gleitkufe 15.3 bei allen Ausführungsformen - in einer Längsschnittebene betrachtet - einen Eckpunkt P2 aufweisen, der gegenüber dem untersten Gleitpunkt 15.2 nach oben hin (d.h. parallel zur z-Achse) zurückversetzt ist. In Fig. 3E ist dieser Eckpunkt P2 zu erkennen.

Wie bereits erwähnt, sollte der unterste Gleitpunkt 15.2 wegen der Integrationswirkung einen möglichst grossen Radius haben. Weiterhin sollte der unterste Gleitpunkt 15.2 nicht unmittelbar an einer Kante der Gleitkufe 15.3 sitzen, da die Gleitkufe 15.3 sonst die Tendenz hat entlang dieser Kante über die Oberfläche F geführt zu werden. In diesem Fall wäre die Integrationswirkung reduziert und das Gleitverhalten wäre nicht vorteilhaft. Daher hat der unterste Gleitpunkt 15.2 bei allen Ausführungsformen vorzugsweise einen seitlichen Abstand A1 (parallel zur x-Achse) gegenüber einer unteren Längskante 15.11 der Gleitkufe 15.3 und einen Längsabstand A2 (parallel zur y-Achse) gegenüber einer unteren Querkante 15.10 der Gleitkufe 15.3. Den Längsabstand A2 kann man in der Fig. 3C erkennen. Der seitliche Abstand A1 ist in Fig. 3E gezeigt.

Zusätzlich hat der unterste Gleitpunkt 15.2 bei allen Ausführungsformen vorzugsweise einen seitlichen Abstand A3 auch gegenüber der äusseren unteren Längskante 15.12 (die in Fig. 3C links an der Gleitkufe 15.3 gezeigt ist) und einen Abstand A4 gegenüber einer unteren Querkante 15.13 (die in Fig. 3C hinten an der Gleitkufe 15.3 gezeigt ist).

Die Gleitkufe 15.3 hat bei allen Ausführungsformen eine konkave Wandfläche 15.10, die im Wesentlichen äquidistant zu der äusseren Mantelfläche des Tastarms 13.1 verläuft. In Fig. 3E ist die konkave Wandfläche 15.10 zu erkennen. Diese Konstellation ermöglicht einen besonders geringen Abstand zwischen Gleitkufe 15.3 und Tastarm 13.1 und einen mechanisch robusten Aufbau.

Wie man den beispielhaft zu verstehenden Figuren 3A - 3C entnehmen kann, hat der Rauheitsmesstaster 15 eine Längsform an deren vorderen Bereich die Gleitkufe 15.3 und die Tastspitze 15.4 nebeneinander sitzen. Der Rauheitsmesstaster 15 ist dazu ausgelegt in eine Richtung bewegt zu werden, die parallel zur Längsachse LA oder leicht schräg zur Längsachse LA verläuft. Dabei wird der Rauheitsmesstaster 15 vorzugsweise gezogen, er kann aber auch geschoben werden.

Vorzugsweise hat der Rauheitsmesstaster 15 eine Längsform, die sich zum vorderen Bereich hin verjüngt, wie man z.B. der Fig. 3A entnehmen kann. Der Rauheitsmesstaster 15 kann bei allen Ausführungsformen aus mehreren Elementen zusammengesetzt sein, die zum vorderen Bereich hin einen immer kleineren Durchmesser haben.

Damit die Tastspitze 15.4 in z-Richtung unabhängig von der Gleitkufe 15.3 ausgelenkt werden kann, wenn der Rauheitsmesstaster 15 über eine Oberfläche F geführt wird, ist der Gleitkufe 15.3 z.B. fest mit einem Gehäuse 19 verbunden, während sich der Tastarm 13.1, an dessen extremalem Ende die Tastspitze 15.4 sitzt, sich z.B. ins Innere eines Hohlzylinders 13.3 erstreckt. In den Figuren 3B und 3C ist zu erkennen, dass die Gleitkufe 15.3 an einen länglichen Körper 15.5. sitzen kann, der z.B. mechanisch mit dem Hohlzylinder 13.3 verbunden ist. In diesem Fall ist der Tastarm 13.1 beweglich im Inneren des Hohlzylinders 13.3 gelagert. In Fig. 3 C ist im Bereich B2 zu erkennen, wie sich der Tastarm 13.1 ins Innere des Hohlzylinders 13.3 erstreckt.

Da sowohl die Gleitkufe 15.3 als auch die Tastspitze 15.4 einem Verschleiss unterliegen, sind vorzugsweise bei allen Ausführungsformen beide Elemente 15.3, 15.4 auswechselbar ausgelegt. Der Rauheitsmesstaster 15 kann daher z.B. über einen Wechselteller 15.6 mit einer Vorrichtung 10 (z.B. in Form eines Messgeräts, wie in Fig. 5 gezeigt) verbunden sein.

Der Rauheitsmesstaster 15 der Erfindung kann bei allen Ausführungsformen mit einem (Feder-)Parallelogrammaufbau verbunden sein, der als Gelenkkette dient, wie im Patent EP1589317 B1 (dort in Fig. 2A gezeigt) oder in der eingangs erwähnten Patentanmeldung WO2010079019A2 (dort in Fig. 6 gezeigt) beschrieben.

Fig. 4 zeigt einen schematischen Aufbau zum Anschliessen des Rauheitsmesstasters 15 an einen (Feder-)Parallelogrammaufbau 12.1 eines (Rauheits-)Tastsystems 12.

Gemäß Erfindung wird der Rauheitsmesstaster 15 samt Gleitkufe 15.3 und Tastspitze 15.4 solidarisch über die abzutastende Oberfläche F bewegt. In Fig. 4 sind zwei Zähne 7 eines Stirnrads gezeigt, wobei hier die Oberfläche F einer Zahnflanke abgetastet wird.

Die Gleitkufe 15.3 und Tastspitze 15.4 werden beim Messen der Rauheit der abzutastenden Oberfläche F gezogen oder geschoben. Die Tastspitze 15.4 sitzt in einem kleinen Abstand A (siehe Fig. 3E) neben dem untersten Gleitpunkt 15.2 der Gleitkufe 15.3. In der Seitenansicht der Fig. 4 sitzt die Tastspitze 15.4 räumlich vor der Gleitkufe 15.3.

Der Abstand A beträgt bei allen Ausführungsformen zwischen 0,1mm und 1,5mm.

Die Tastspitze 15.4 ist bei allen Ausführungsformen vorzugsweise schwebend hebelarm-artig gelagert, um Strukturen, Elemente und Merkmale der Oberfläche F, die eine Grösse im Bereich von nm bis ca. 500 µm haben, ertasten oder messen zu können.

Der Messtaster 15 sitzt bei der Fig. 4 gezeigten Ausführungsform an einem Parallelogrammaufbau 40. Optional kann der Messtaster 15 über einen (Wechsel-) Teller 15.6, wie bereits erwähnt, mit dem Federparallelogrammaufbau 40 verbunden sein. Der optionale (Wechsel-) Teller 15.6 ist gestrichelt gezeigt.

Der Messtaster 15 kann bei allen Ausführungsformen aber auch in anderer Art und Weise z.B. mit einer beweglichen Messachse oder mit einer Tastkopfbasis einer Vorrichtung 10 verbunden sein. Der Messtaster 15 kann bei allen Ausführungsformen jedoch auch an einem Federgelenk angebracht sein.

Der Parallelogrammaufbau 40 kann zwei parallele Elemente 41 und zwei dazu senkrecht stehende andere parallele Elemente 42 umfassen. Das hintere Element 42 kann als Referenzbasis dienen. In diesem Fall ist das hintere Element 42 zum Beispiel mit dem Turm oder mit der Tastkopfbasis einer Vorrichtung 10 (z.B. eines Koordinaten-Messsystems der Fig. 5) verbunden. An der Referenzbasis kann ein Zeigerelement 43 oder Kragarm vorhanden sein. Wenn nun die Gleitkufe 15.3 samt der daneben liegenden Tastspitze 15.4 parallel zur z-Richtung ausgelenkt wird, dann verlagert sich das vordere Element 42 in der x-z-Ebene. Diese Lateralbewegung in der x-z-Ebene drückt sich aus in einer relativen Bewegung des Zeigerelements 43 oder Kragarms in Bezug auf einen 1D-Messwertgeber 44. Dieser Messwertgeber 44 ist in Form einer linearen Skala stilisiert dargestellt. Der Messwertgeber 44 kann somit ein Signal liefern, das eine Aussage über die (makroskopische) Form der Oberfläche F zulässt.

Die Vorrichtung 10 (z.B. ein Koordinaten-Messsystem der Fig. 5) kann die Gleitkufe 15.3 zum Beispiel radial an ein zu prüfendes Bauteil heran führen, wobei die Längsachse LA eine horizontale Lage hat. Weiterhin kann die Vorrichtung 10 das Bauteil 11 dabei drehen oder bewegen, bis die Gleitkufe 15.3 es an einer vorgebbaren Oberfläche F berührt. In Fig. 4 ist diese Drehbewegung des Bauteils 11 durch einen Doppelpfeil mit der Bezeichnung ω1 angedeutet.

So kann zum Beispiel die gekrümmte Zahnfläche F des Zahns 7 des Bauteils 11 in einem Startpunkt (z.B. nahe am Zahnfuß 8) angetastet werden. Zu diesem Zweck ist der Messtaster 15 mittels Zustellbewegungen der Vorrichtung 10 im x-y-z-Koordinatensystem zustellbar und aufgrund des speziellen Parallelogrammaufbaus in einer, zwei oder in allen drei Koordinatenrichtungen x, y, z des Raumes auslenkbar, wobei diese Auslenkungen Signale erzeugen.

Nun wird die Gleitkufe 15.3 ausgehend von dem Startpunkt bis zu einem Endpunkt über die Oberfläche F bewegt (z.B. bis zu einem Punkt, der nahe am Zahnkopf des Zahns 7 liegt). Vorzugsweise wird die Gleitkufe 15.3 über diese Oberfläche F gezogen, wie in Fig. 4 durch den Pfeil P3 angedeutet. Die Tastspitze 15.4 läuft bei gezogener Gleitkufe 15.3 neben dieser her. Um der Form der Zahnflanke des Zahns 7 folgen zu können, kann die Vorrichtung 10 eine koordinierte Drehbewegung ω1 ausführen, damit der (Rauheits)Messtaster 15 flach (z.B. tangential) in Profilrichtung über die Zahnflanke geführt wird.

Die Vorrichtung 10 kann z.B. zwei Ausgangssignale liefern, die zueinander in Bezug gesetzt werden. Das erste Ausgangssignal stammt z.B. vom Abtasten der Oberfläche F mit der Gleitkufe 15.3. Das zweite Ausgangssignal stammt z.B. von der Tastspitze 15.4. Diese Signale stehen sowohl räumlich als auch zeitlich zueinander in Bezug und erlauben Aussagen über die Struktur der Oberfläche F.

Die Vorrichtung 10 kann mit der beschriebenen Messanordnung z.B. alle Auslenkungen der Gleitkufe 15.3 entlang einer Geraden (bei einer 1D-Messung), in einer x-z-Ebene (bei einer 2D-Messung) oder in dem von den drei Koordinatenrichtungen x, y und z aufgespannten Raum (bei einer 3D-Messung) erfassen. Die Auslenkungen in der z-Ebene können durch ein 1D-Messgerät erfasst werden, wie zum Beispiel in Fig. 4 dargestellt.

In einer vorteilhaften Ausführungsform der Erfindung, die in Fig. 5 gezeigt ist, geht es um ein vollautomatisches, CNC-gesteuertes Messgerät 10, das mit einem Messtaster 15 der Erfindung ausgestattet ist. Das Messgerät 10 ist zum Beispiel geeignet zum Prüfen der Oberflächenrauheit, Form oder Geometrie von Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Bauteilen 11, zur Kurven- und Nockenwellenmessung oder auch zur Rotormessung, um nur einige Einsatzmöglichkeiten aufzuzählen.

Das Messgerät 10 umfasst einen über eine Ansteuerung (nicht sichtbar) antreibbaren Mitnehmer 13 und ein Zentriermittel 14, wobei der Mitnehmer 13 und das Zentriermittel 14 so angeordnet sind, dass ein zu vermessendes Bauteil 11 koaxial zwischen Mitnehmer 13 und Zentriermittel 14 einspannbar ist, wie in Fig. 5 anhand eines stilisierten Zylinderrades 11 gezeigt.

Das Messgerät 10 umfasst, wie in Fig. 5 gezeigt, mindestens einen Messtaster 15 zum eindimensionalen, zweidimensionalen oder dreidimensionalen Vermessen des in dem Messgerät 10 eingespannten Bauteiles 11. Vorzugsweise ist ein Tastsystem 12 mit (Feder-) Parallelogrammaufbau 12.1 vorgesehen, das in der Höhe (parallel zur z-Achse) verschoben werden kann. Ausserdem kann der Messtaster 15 weitere Zustellbewegungen ausführen (vorzugsweise kommt hier eine 4-Achsen Bahnsteuerung des Messgeräts 10 zum Einsatz). Bei der bereits erwähnten Drehbewegung ω1 handelt es sich um eine Drehung, die um die A1-Achse des Messgeräts 10 ausgeführt wird.

Dabei können - je nach Ausführungsform - sowohl die Gleitkufe 15.3, die über das Gehäuse 19 mit dem Parallelogrammaufbau 40 verbunden ist, Signale, als auch die Tastspitze 15.4, die in den Rauheitsmesstaster 15 integriert ist, Signale erzeugen.

Weitere Details zur genauen Funktionsweise der Vorrichtung 10 können der publizierten Patentanmeldung EP2199732A1 entnommen werden.

**Bezugszeichen:**

| | |
|---|---|
| Gleitkufentaster | 1 |
| Gleitkufe | 2 |
| Taster | 3 |
| Tastspitze | 4 |
| Zahn | 7 |
| Zahnfuß | 8 |
| Messgerät / Vorrichtung | 10 |
| Bauteil / Zahnrad | 11 |
| (Feder-)Parallelogrammaufbau | 12.1 |
| | |
| (Rauheits-)Tastsystem | 12 |
| (Feder-)Parallelogrammaufbau | 12.1 |
| Mitnehmer | 13 |
| Hebelarm / Tastarm | 13.1 |
| Hohlzylinder | 13.3 |
| Zentriermittel | 14 |
| (Rauheits)Messtaster | 15 |
| unterster Berührpunkt | 15.1 |
| unterster Gleitpunkt | 15.2 |
| Gleitkufe | 15.3 |
| Tastspitze | 15.4 |
| Grundfläche | 15.5 |
| rückwärtiges Ende | 15.5 |
| Wechselteller | 15.6 |
| Platte | 15.7 |
| Endfläche/Stirnfläche | 15.8 |
| Unterseite | 15.9 |
| untere Querkante | 15.10 |
| untere Längskante | 15.11 |
| äusseren untere Längskante | 15.12 |
| untere Querkante | 15.13 |
| Gehäuse | 19 |
| | |
| Parallelogrammaufbau | 40 |
| paarweise angeordnete Elemente | 41 |
| paarweise angeordnete Elemente | 42 |
| Referenz / Zeigerelement | 43 |
| Stilisierter Messwertgeber | 44 |
| | |
| Abstand | A |
| seitlicher Abstand | A1 |
| Längsabstand | A2 |
| seitlicher Abstand | A3 |
| Längsabstand | A4 |
| Bereich | B1 |
| Bereich | B2 |
| Rotationsachse | A1 |
| Durchmesser | D1 |
| Oberfläche | F |
| Gerade | G1 |
| Gerade | G2 |
| Längsachse | LA |
| Punkt | P1 |
| Punkt | P2 |
| Pfeil | P3 |
| Schnittebene | SE |
| Koordinaten | x, y, z |
| Drehbewegung | ω1 |

## Patentansprüche

1. Rauheitsmesstaster (15) mit einem Gleitelement und einer Tastspitze (15.4), wobei die Tastspitze (15.4) im Bereich des extremalen Endes eines Tastarms (13.1) angeordnet ist, der eine Längsausdehung parallel zu einer Längsachse (LA) aufweist und der hebelartig gelagert ist, und wobei das Gleitelement in Form einer Gleitkufe (15.3) ausgelegt ist, **dadurch gekennzeichnet, dass**
- die Gleitkufe (15.3) in einer Schnittebene (SE) betrachtet, die senkrecht zu der Längsachse (LA) steht, seitlich neben der Tastspitze (15.4) angeordnet ist, und
- die Tastspitze (15.4) in einer Querschnittsebene (SE) betrachtet, die senkrecht zu der Längsachse (LA) steht, einen untersten Berührpunkt (15.1) definiert und dass die Gleitkufe (15.3) in dieser Querschnittsebene (SE) betrachtet einen bogenförmigen Verlauf mit einem untersten Gleitpunkt (15.2) hat
- wobei ein Abstand A des untersten Berührpunkts (15.1) zu dem untersten Gleitpunkt (15.2) zwischen 0,1 mm und 1,5 mm beträgt und
- wobei die Gleitkufe (15.3) eine konkave Wandfläche (15.10) hat.

2. Rauheitsmesstaster (15) nach Anspruch 1, **dadurch gekennzeichnet, dass** der Tastarm (13.1) im Bereich seines extremalen Endes die Form eines Vollzylinders, eines Hohlzylinders oder eines anderen stabförmigen Elementes hat und dass die Tastspitze (15.4) am Außenumfang des stabförmigen Elementes angeordnet ist.

3. Rauheitsmesstaster (15) nach Anspruch 2, **dadurch gekennzeichnet, dass** die Tastspitze (15.4) das stabförmige Element teilweise oder ganz durchdringt.

4. Rauheitsmesstaster (15) nach Anspruch 1, **dadurch gekennzeichnet, dass** der unterste Gleitpunkt (15.2) der Gleitkufe (15.3) einen seitlichen Abstand (A1) gegenüber einer unteren Längskante (15.11) der Gleitkufe (15.3) und einen Längsabstand (A2) gegenüber einer unteren Querkante (15.10) der Gleitkufe (15.3) aufweist.

5. Rauheitsmesstaster (15) nach einem der vorhergehenden Ansprüche 1 - 4, **dadurch gekennzeichnet, dass** die Gleitkufe (15.3), in einer Längsschnittebene betrachtet, einen konvexen Kurvenverlauf mit einem Punkt (P1) hat, in dem die Steigung des Kurvenverlaufs gleich Null ist, wobei dieser Punkt vorzugsweise in derselben Querschnittsebene (SE) liegt wie ein unterster Berührpunkt (15.1) der Tastspitze (15.4).

6. Rauheitsmesstaster (15) nach einem der vorhergehenden Ansprüche,
**dadurch gekennzeichnet, dass** er einen Bereich umfasst, der mindestens teilweise hohl oder offen ausgeführt ist, um im Inneren dieses Bereichs eine Hebelarm-Lagerung aufzunehmen, mittels welcher der Tastarm (13.1) hebelartig gelagert ist.

7. Rauheitsmesstaster (15) nach einem der vorhergehenden Ansprüche 1 - 6, **dadurch gekennzeichnet, dass** der Rauheitsmesstaster (15) im Bereich des extremalen Endes des Tastarms (13.1) einen asymmetrischen Aufbau hat, bei dem die Gleitkufe (15.3) rechts oder links seitlich der Tastspitze (15.4) sitzt.

8. Rauheitsmesstaster (15) nach einem der vorhergehenden Ansprüche 1 - 6, **dadurch gekennzeichnet, dass** der Rauheitsmesstaster (15) im Bereich des extremalen Endes des Tastarms (13.1) einen symmetrischen Aufbau hat, bei dem eine Gleitkufe (15.3) rechts und eine Gleitkufe (15.3) links seitlich der Tastspitze (15.4) sitzt.

9. Vorrichtung (10) mit einem Rauheitstastsystem (12) und einem Rauheitsmesstaster (15) gemäß einem der Ansprüche 1 - 8, **dadurch gekennzeichnet, dass** das Rauheitstastsystem (12) zum Messen der Oberflächenrauheit der Zahnflanken von Zahnrädern (11) ausgelegt ist.

10. Vorrichtung (10) nach Anspruch 9, **dadurch gekennzeichnet, dass** sie eine oder mehrere Tasterachsen umfasst, um beim Messen der Oberflächenrauheit der Zahnflanken von Zahnrädern (11) die Längsachse (LA) des Rauheitsmesstasters (15) flach in Profilrichtung entlang der Zahnflanke führen zu können.

11. Verwendung eines Rauheitsmesstasters (15) gemäß einem der Ansprüche 1 - 8 oder einer Vorrichtung gemäß einem der Ansprüche 9 oder 10 zum Messen der Oberflächenrauheit der Zahnflanken von Zahnrädern (11), **so, dass** die Längsachse (LA) des Rauheitsmesstasters (15) flach in Profilrichtung entlang der Zahnflanke geführt wird, vorzugsweise gezogen von einem Startpunkt im Bereich eines Zahnfußes (8) zu einem Endpunkt im Bereich eines Zahnkopfes.

## Claims

1. A roughness measurement sensor (15), comprising a sliding element and a sensor tip (15.4), wherein the sensor tip (15.4) is arranged in the region of the extremal end of a sensor arm (13.1), which has a longitudinal extension parallel to a longitudinal axis (LA) and is mounted in a lever-like manner and wherein the sliding element is formed in the manner of a skid (15.3), **characterized in that**
- the skid (15.3), as viewed in a plane of intersection (SE) which stands perpendicularly to the longitudinal axis (LA), is arranged laterally adjacent to the sensor tip (15.4),
- the sensor tip (15.4), as viewed in a cross-sectional plane (SE) which stands perpendicularly to the longitudinal axis (LA), defines a lowermost contact point (15.1), and that the skid (15.3), as viewed in said cross-sectional plane (SE), has a curved progression with a lowermost sliding point (15.2)
- wherein a distance A of the lowermost contact point (15.1) to the lowermost sliding point (15.2) is between 0.1 mm and 1.5 mm and
- wherein the skid (15.3) has a concave wall surface (15.10).

2. A roughness measurement sensor (15) according to claim 1, **characterized in that** the sensor arm (13.1) has the shape of a full cylinder, a hollow cylinder or any other rod-shaped element in the region of its extremal end, and that the sensor tip (15.4) is arranged on the outer circumference of the rod-shaped element, wherein the sensor tip (15.4) preferably extends in a radial direction, relating to the longitudinal axis (LA).

3. A roughness measurement sensor (15) according to claim 2, **characterized in that** the sensor tip (15.4) penetrates the rod-shaped element either in part or in full.

4. A roughness measurement sensor (15) according to claim 1, **characterized in that** the lowermost sliding point (15.2) of the skid (15.3) has a lateral distance (A1) from a bottom longitudinal edge (15.11) of the skid (15.3), and a longitudinal distance (A2) from a bottom transverse edge (15.10) of the skid (15.3).

5. A roughness measurement sensor (15) according to one of the preceding claims 1 to 4, **characterized in that** the skid (15.3), as viewed in a longitudinal sectional plane, has a convex curved progression with a point (P1) in which the ascending gradient of the curved progression is equal zero, wherein said point preferably lies in the same cross-sectional plane (SE) as a lowermost contact point (15.1) of the sensor tip (15.4).

6. A roughness measurement sensor (15) according to one of the preceding claims, **characterized in that** it comprises a region which is formed at least partly in a hollow or open manner in order to accommodate in the interior of said region a lever-arm bearing by means of which the sensor arm (13.1) is mounted in the manner of a lever.

7. A roughness measurement sensor (15) according to one of the preceding claims 1 to 6, **characterized in that** the roughness measurement sensor (15) has an asymmetric configuration in the region of the extremal end of the sensor arm (13.1), in which the skid (15.3) is seated laterally to the right or left of the sensor tip (15.4).

8. A roughness measurement sensor (15) according to one of the preceding claims 1 to 6, **characterized in that** the roughness measurement sensor (15) has a symmetric configuration in the region of the extremal end of the sensor arm (13.1), in which one skid (15.3) is seated laterally to the right and one skid (15.3) laterally to the left of the sensor tip (15.4).

9. An apparatus (10) with a roughness sensor system (12) and a roughness measurement sensor (15) according to one of the claims 1 to 8, **characterized in that** the roughness sensor system (12) is formed for measuring the surface roughness of the tooth flanks of gearwheels (11).

10. An apparatus according to claim 11, **characterized in that** it comprises one or several sensor axes in order to allow the guidance of the longitudinal axis (LA) of the roughness measurement sensor (15) in a flat manner in the profile direction along the tooth flank during the measurement of the surface roughness of the tooth flanks of gearwheels (11).

11. The use of a roughness measurement sensor (15) according to one of the claims 1 to 8 oder of an apparatus according to claims 9 or 10 for measuring the surface roughness of the tooth flanks of gearwheels (11), **such that** the longitudinal axis (LA) of the roughness measurement sensor (15) is guided in a flat manner in the profile direction along the tooth flank, preferably drawn from a starting point in the region of a tooth root (8) to an end point in the region of a tooth head.

## Revendications

1. Capteur de rugosité (15) comprenant un élément coulissant et une pointe de contact (15.4), la pointe de contact (15.4) étant agencée dans la zone de la toute extrémité d'un bras de palpage (13.1) qui présente une étendue longitudinale parallèle à un axe longitudinal (LA) et qui est monté à la manière d'un levier, et l'élément coulissant étant conçu sous la forme d'un patin (15.3), **caractérisé en ce que**
- le patin (15.3), vu dans un plan de coupe (SE) perpendiculaire à l'axe longitudinal (LA), est agencé latéralement à côté de la pointe de contact (15.4),
- la pointe de contact (15.4), vue dans un plan en coupe transversale (SE) perpendiculaire à l'axe longitudinal (LA), définit un point de contact inférieur (15.1) et **en ce que** le patin (15.3), vu dans ce plan en coupe transversale (SE), s'étend en forme d'arc avec un point de coulissement inférieur (15.2),
- dans lequel la distance A entre le point de contact inférieur (15.1) et le point de coulissement inférieur (15.2) est comprise entre 0,1 mm et 1,5 mm, et
- dans lequel le patin (15.3) possède une surface de paroi concave (15.10).

2. Capteur de rugosité (15) selon la revendication 1, **caractérisé en ce que** le bras de palpage (13.1), au niveau de sa toute extrémité, présente la forme d'un cylindre plein, d'un cylindre creux ou d'un autre élément en forme de barre, et **en ce que** la pointe de contact (15.4) est agencée sur le pourtour extérieur de l'élément en forme de barre.

3. Capteur de rugosité (15) selon la revendication 2, **caractérisé en ce que** la pointe de contact (15.4) pénètre partiellement ou totalement dans l'élément en forme de barre.

4. Capteur de rugosité (15) selon la revendication 1, **caractérisé en ce que** le point de coulissement inférieur (15.2) du patin (15.3) présente une distance latérale (A1) par rapport à un bord longitudinal inférieur (15.11) du patin (15.3), et une distance longitudinale (A2) par rapport à un bord transversal inférieur (15.10) du patin (15.3).

5. Capteur de rugosité (15) selon l'une des revendications précédentes 1 à 4, **caractérisé en ce que** le patin (15.3), vu dans un plan en coupe longitudinale, présente une courbe convexe avec un point (P1), dans laquelle la pente de la courbe est égale à zéro, ce point se trouvant de préférence dans le même plan de coupe transversale (SE) qu'un point de contact inférieur (15.1) de la pointe de contact (15.4).

6. Capteur de rugosité (15) selon l'une des revendications précédentes, **caractérisé en ce qu'**il comprend une zone qui est réalisée au moins en partie creuse ou ouverte pour pouvoir recevoir, à l'intérieur de cette zone, un support de bras de levier permettant au bras de palpage (13.1) de pouvoir être monté à la façon d'un levier.

7. Capteur de rugosité (15) selon l'une des revendications précédentes 1 à 6, **caractérisé en ce que** le capteur de rugosité (15) présente, dans la zone de la toute extrémité du bras de palpage (13.1), une structure asymétrique sur laquelle le patin (15.3) repose latéralement à droite ou à gauche de la pointe de contact (15.4).

8. Capteur de rugosité (15) selon l'une des revendications précédentes 1 à 6, **caractérisé en ce que** le capteur de rugosité (15) présente, dans la zone de la toute extrémité du bras de palpage (13.1), une structure symétrique sur laquelle un patin (15.3) repose latéralement à droite et un patin (15.3) à gauche de la pointe de contact (15.4).

9. Dispositif (10) comprenant un système de mesure de rugosité (12) et un capteur de rugosité (15) selon l'une des revendications 1 à 8, **caractérisé en ce que** le système de mesure de rugosité (12) est conçu pour mesurer la rugosité de surface des flancs de dent de roues dentées (11).

10. Dispositif (10) selon la revendication 9, **caractérisé en ce qu'**il comprend un ou plusieurs axes de palpage pour pouvoir, lors de la mesure de la rugosité de surface des flancs de dent de roues dentées (11), guider l'axe longitudinal (LA) du capteur de rugosité (15) à plat dans la direction du profil le long du flanc de dent.

11. Utilisation d'un capteur de rugosité (15) selon l'une des revendications 1 à 8 ou d'un dispositif selon l'une des revendications 9 ou 10 pour mesurer la rugosité de surface des flancs de dent de roues dentées (11), de sorte que l'axe longitudinal (LA) du capteur de rugosité (15) est guidé à plat dans la direction du profil le long du flanc de dent, de préférence depuis un point de départ dans la zone du pied de dent (8) jusqu'à un point final dans la zone de la tête de dent.
